# EUROPEAN PATENT APPLICATION

(11) **EP 4 166 273 A1**
(43) Date of publication of application: **19.04.2023**
(21) Application number: 22382974.8
(22) Date of filing: 13.10.2022
(51) Int. Cl.: B23P 19/10, B23K 37/00, E05D 11/00

(54) **HINGE PART POSITIONING TOOL**

(30) Priority: 18.10.2021 ES 202132038
(71) Applicant: Gustaman, S.L., 08923 Barcelona (ES)
(72) Inventor: Moral Castro, Raúl, Barcelona (ES)
(74) Representative: Balder IP Law, S.L.

(57) **Abstract**

Tool (H) for positioning hinge parts (B1, B2) for welding them to a frame (M1) and window/door/gate leaf (M2), comprising a first support (1) for the hinge parts (B1, B2), means for temporary attachment of the hinge parts (B1, B2) to the first support (1) and means for positioning the support (1) with respect to the frame (M1) and to the leaf (M2), wherein the first support (1) comprises an angled profile, the means for temporarily attaching the hinge parts to the first support (1) comprise at least one magnet (M) positioned on the first support (1) and the means for positioning the support (1) comprise at least two feet (4) positioned at the ends of the tool (H).

## Description

### TECHNICAL FIELD

The present invention refers to a tool for positioning hinge parts (including pivots) with respect to a frame and window/door/gate leaf, for welding, partially or totally to said assembly.

### BACKGROUND

Hinge part positioning tools for welding window/door/gate leaves to frames already exist. One such tool consists of two cylinders, blind on one side, into which the ends of the hinge parts are inserted, and which comprise positioning flaps intended to be inserted between the frame and the leaf, so that the tool is well positioned.

For the hinge part to be supported, only a portion of the hinge part has to be inserted into the opening. The tool further comprises a frame and leaf separator plate. One portion of the leading edge of the separator plate is welded to the rear of the hinge part support so that the faces of the separator plate extend in the direction of the axis of the circular opening. Finally, the tool comprises a support plate on the frame and leaf. The support plate is perpendicular to the separator plate and is welded to the back of the separator plate, so that when resting the support plate on a frame and leaf, the separator plate ensures a gap between the frame and the leaf.

These tools for positioning hinge parts for welding to the frame and window/door/gate leaf are disadvantageous for several reasons.

First, a separate tool is needed for each of the two hinge parts, which can cause alignment problems between them during welding and consequently worsen the mechanical properties of the hinge and accelerate its wear.

Secondly, the positioning tool can only be used with hinge parts of a particular diameter appropriate to the diameter of the circular opening, i.e., different positioning tools are required to position hinge parts of different diameters. Thirdly, such a positioning tool only allows a single specific separation distance between the hinge part and the frame and leaf. This distance is defined by the thickness of the walls of the circular opening, so that varying this distance requires the use of a different tool.

Therefore, a hinge part positioning tool for frame and window/door/gate leaf welding that can be used with hinge parts of different diameters, that permits improved alignment between the hinge parts during welding, and that permits adjustment of the distance separating the hinge parts and the frame and leaf would be advantageous.

### DESCRIPTION OF THE INVENTION

To overcome the drawbacks of the current state of the art, the present invention proposes a tool for positioning hinge parts for welding them to a frame and to window/door/gate leaf, comprising a first support for the hinge parts, means for temporarily attaching the hinge parts to the first support, and means for positioning the support with respect to the frame and leaf, wherein:
- the first support comprises an angled profile;
- the means for temporarily attaching the hinge parts to the first support comprises at least one magnet positioned on the first support
- the means for positioning the support comprise at least two feet positioned at the ends of the tool.

The magnetic force exerted by the magnets on the hinge or pivot components supported by the first support allows the hinge parts to be firmly fixed to the first support and thus positioned as desired with respect to the frame and leaf. It should be understood that although the tool is described as being suitable for welding to frame and window/door/gate leaf, it can also be used for welding to folded or flat sheet metal.

In some embodiments, each foot comprises a screw, a screw actuator, a support foot positioned to rest on the frame and leaf and a spacer to separate the frame from the leaf.

The first support, having an angled profile, makes it possible to support components of hinges of various diameters. This advantage derives, at least in part, from the fact that the surfaces of the first support delimiting the angle are tangent to the parts of hinges with various diameters and thus permit a tangential support of the generating lines of hinge parts of different diameters. The regions of tangency depend on the diameter of the hinges. There is a locking nut positioned on the support feet.

In some embodiments, the angled profile is L-shaped or V-shaped. L-shaped or V-shaped profiles are advantageous compared to other profiles with less common shapes because they are simple to manufacture and are inexpensive.

In some embodiments, the tool comprises magnets located on the first support. This version of the tool is potentially cheaper to manufacture. The use of multiple magnets instead of a single magnet is advantageous because it allows a wide variety of relatively small magnets with relatively simple shapes distributed on the first support to be used instead of a single relatively large magnet with a specific magnetic force placed at a specific location on the support.

In some embodiments, the magnet is a neodymium magnet. The number of magnets can vary, and alternative embodiments with several magnets are possible.

In some embodiments, the spacer is a projection from the support foot.

In some embodiments, the spacer is attached to the support foot but is detachable. That way, the spacer can easily be replaced by another spacer, for example of a different size. This makes it possible to easily adapt the tool to different separations between frame and leaf. In some of these embodiments or in others, the support foot is attached to the screw but can be detached.

In some embodiments, the spacer is a rod. This spacer is particularly advantageous because of its simple shape. In addition, this spacer being small requires little material, resulting in lower cost and relatively less weight.

In some embodiments, the positioning tool comprises an intermediate support holding the first support by which the intermediate support mechanically joins the first support to the feet. Using an intermediate support eliminates the need to directly attach the first support to the feet and makes it unnecessary to adjust the geometry and mechanical properties of the first support so that they are suitable for a sufficiently robust direct attachment.

In some embodiments, the first support is attached directly to the feet. These embodiments require fewer components than those for an intermediate support.

Finally, some embodiments may comprise locking nuts screwed onto the bolt, intended to hold the support in place once the appropriate configuration for welding has been reached. These are preferably nuts with a rough edge to facilitate tightening.

The different features and embodiments of the invention defined above can be combined with each other, provided that they are mutually compatible.

Additional advantages and characteristics of the invention will become apparent from the following detailed description and will be pointed out particularly in the appended claims.

### BRIEF DESCRIPTION OF THE DRAWINGS

To complement the description and to help better understand the characteristics of the invention, a set of figures based on some examples of practical embodiments of the invention tool is attached as an integral part of the description and illustrates the following, by way of example and not restrictively:
Figure 1 shows a perspective view of the tool from below.
Figure 2 shows a profile view of the tool.
Figure 3 shows a perspective view from above.
Figure 4 shows a perspective view of one embodiment of the tool based on the invention.
Figure 5 shows a perspective view of one embodiment of the tool based on the invention.
Figure 6 shows a plan view of one embodiment of the tool based on the invention.
Figure 7 shows a perspective view of one embodiment of the tool based on the invention in which the tool is in use.
Figure 8 shows a schematic view of a part of one embodiment of the tool based on the invention in which the tool is in use.
Figure 9 shows a perspective view of one embodiment of the tool based on the invention.

### DESCRIPTION OF A PREFERRED EMBODIMENT OF THE INVENTION

In describing the possible preferred embodiments of the invention, numerous details are necessary to facilitate a better understanding of the invention. Even so, without these specific details it would be obvious to an expert in this field that the invention can be implemented. On the other hand, well-known features have not been described in detail to avoid unnecessarily complicating the description.

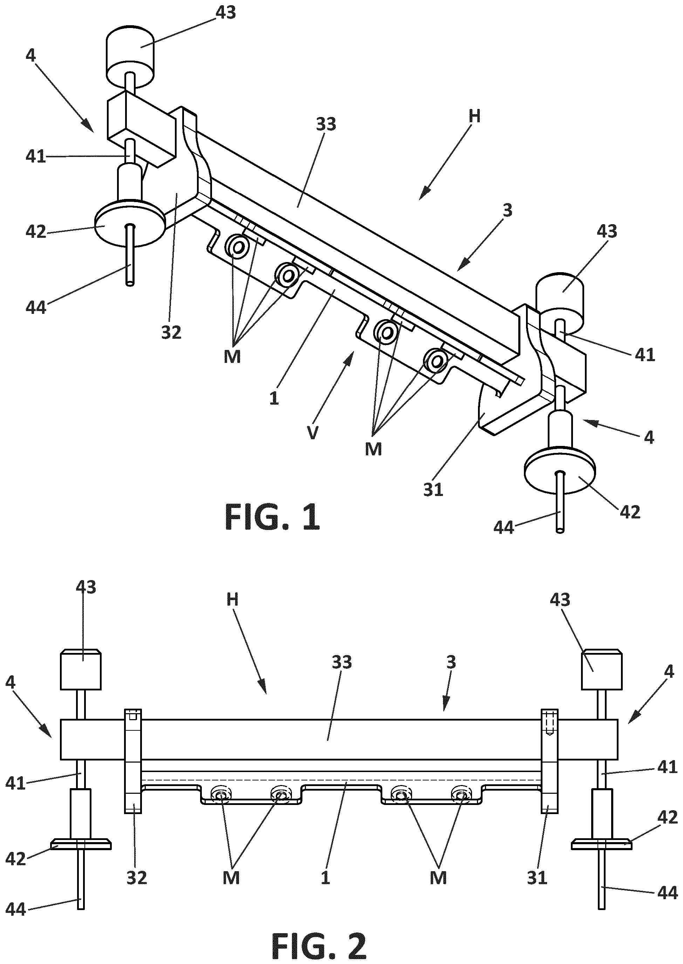

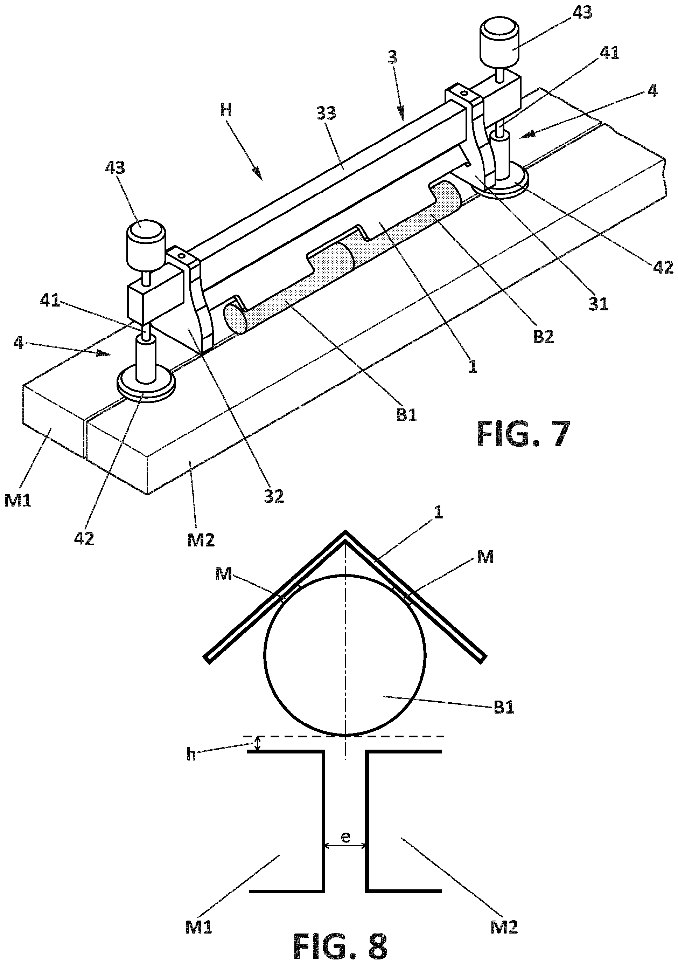

As illustrated for example in Figure 1, the tool for positioning hinge parts H, comprises a first hinge part support 1. (The hinge parts B1 and B2 have been illustrated for example in Figure 7.) The first support 1 has an angled profile defining an inner volume, V, to hold the hinge parts B1 and B2 in place. The inner volume, V, is located between the support profile, 1, and the spacers, 44.

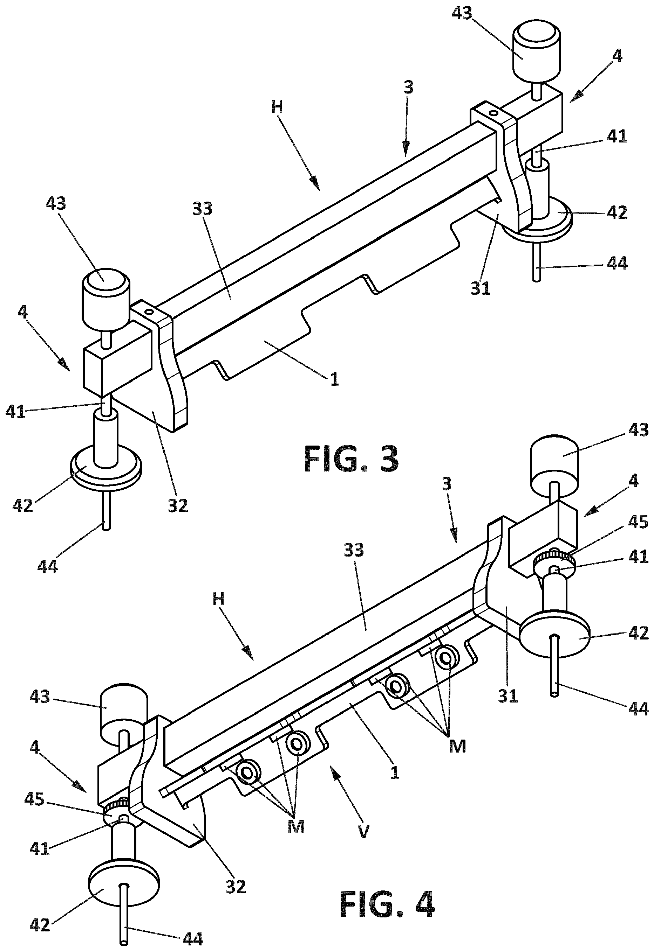

As illustrated in Figures 1 and 4, the tool, H, provides means for temporary attachment of hinge parts B1 and B2 to the first support, 1. This temporary attachment includes magnets, M, positioned on the first support, 1, specifically on the inner volume, V, of first support 1. The orientation and the magnetic polarity of the magnets, M, is such that an attractive force is exerted by the magnets, M, on the hinge parts, B1 and B2, which are positioned on the inner volume, V, and are made of a ferromagnetic material. The force of the magnets is sufficient to hold the hinge in place during the welding process. Once welded, the strength of the weld will be much greater than that of the magnets and the tool can be removed.

From Figure 8 it can be deduced that the surface areas of support profile 1 or of the magnets, M, on which the generating lines (lines that generate the cylinder surface, geometrically speaking) of the hinge parts B1 and B2 rest depend on the diameter of the hinges. For example, an expert in the field would understand in view of Figure 8 that as the diameter of hinge part B1 increases, the area of support profile 1 or of the magnets, M, that contacts hinge part B1 will be further away from the vertex of the angle of the angled profile.

Conversely, if the diameter of hinge part B1 is reduced, this contact area will be closer to the vertex of the angle of the angled profile.

Continuing with Figures 2 and 4, the magnets, M, are positioned on opposite sides of the angled profile. This facilitates obtaining a symmetrical magnetic force on the parts of volume V that span the two halves of the angle of the angled profile.

As illustrated for example in Figure 4, the support profile 1 includes an intermediate support, 3. The intermediate support, 3, mechanically connects the first support, 1, and the feet, 4, such that, when operating the tool, H, the forces resulting from the weight of the first support, 1, and the hinge parts, B1 and B2, are transferred to the feet, 4. The intermediate support, 3, has plates 31 and 32 and a profile, 33. Plates 31 and 32 mechanically connect the initial profile, 1, to profile 33. Profile 33 mechanically joins plates 31 and 32 to the feet, 4.

In the embodiment pictured, the feet have a flat-bottomed surface, i.e., this embodiment is adapted for support on a flush frame and leaf assembly. However, the tool could be applied to a non-flush frame and leaf assembly, i.e., one that is staggered at the level of the hinge. In this case, it is conceivable that the feet would have a stepped-bottom support surface.

It can also be seen that the embodiment illustrated has dimensions on the order of about 20-30 cm, for welding a single hinge. Nonetheless, the tool can also be designed with lengths on the order of meters, for the simultaneous positioning of two or more hinges between frames and leaves. This would guarantee not only an optimal positioning of each hinge, but also that the hinges would be perfectly aligned with each other (i.e., coaxial, as they are essentially cylindrical elements), compensating for possible deformations of the frame and leaf assembly.

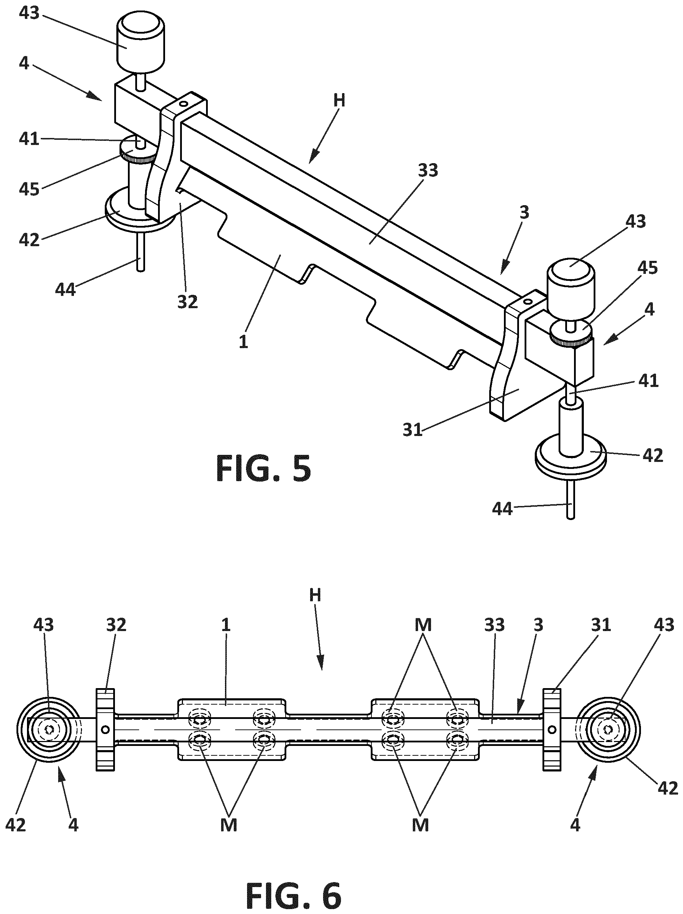

As shown for example in Figure 5, the plates 31 and 32 extend in a direction perpendicular to the longitudinal direction of profile 33. Plates 31 and 32 are fixed to the ends of support profile 1. Profile 33 passes through an opening in each plate 31 and 32 so that profile 33 is joined to each plate 31 and 32. The through hole facilitates assembly of the profile 33 to plates 31 and 32.

As illustrated in Figure 2, a pin can be used to fix one of the plates 31 or 32 to the profile, 33. As also shown in Figure 2, part of the pin is inserted into profile 3 and another part into plate 31 in such a way as to prevent plate 31 from sliding with respect to profile 3.

As illustrated for example in Figure 4, each of the feet, 4, comprises a screw, a screw actuator, 43, (in this case a knob), a support foot, 42, and a spacer, 44. The screw, 41, is coupled on its upper side to the screw actuator, 43, of screw 41. An intermediate part of screw 41 arranged between the support foot, 42, and the actuator, 43, is positioned inside a through hole in profile 33. The through hole in profile 33 has a thread complementary to the thread of screw 41.

The coupling between screw 41 and the actuator, 43, and the coupling between screw 41 and the support foot, 42, is such that it regulates the displacement of screw 41 in the longitudinal direction of screw 41. In other words, it regulates the relative displacement between the actuator, 43, and screw 41 in the longitudinal direction of screw 41 and it regulates the relative displacement between the support foot, 42, and screw 41 in the longitudinal direction of screw 41. Nevertheless, a locking nut, 45, can be positioned on the screw section emerging from the bottom of the support ends, 3, so that once the position is set, the nut, 45, permits the relative position of the screw to be locked in place.

Actuator 43 is fixed to screw 41, so that rotating the actuator, 43, causes screw 41 to rotate. As the relative displacement between screw 41 and actuator 43 and support foot 42 is blocked in the longitudinal direction of screw 41, rotating the screw without screw 41 causes a relative displacement in the longitudinal direction of screw 41 between profile 33 and support foot 42. This way, by operating the actuator, 43, the separation between the support foot, 42, and profile 33 can be adjusted, making it possible to adjust the gap, h, (shown in Figure 8) between the hinge parts B1 and B2 and the frame, M1, and leaf, M2, while operating the tool, H. The gap, h, is adjustable even after coupling the tool, H, to a frame, M1, and leaf, M2, because positioning the support feet, 42, on a frame, M1, and leaf, M2, does not prevent screw 41 from rotating.

As illustrated in Figure 6, the screws, 41, are positioned parallel to the bisector of the angled profile. This is advantageous because the displacement of the angled profile in the direction of the bisector is made possible by means of a simple mechanical construction, i.e., screws 41 arranged parallel to the bisector.

An example of the positioning of support foot 42 resting on a frame M1 and leaf M2 is illustrated in Figure 7. In this figure, it can be seen that moving the first support, 1, in the direction of screw 41 causes the hinge parts B1 and B2 to move away from or towards the frame, M1, and the leaf, M2.

As can be deduced from Figures 7 and 8, the spacers, 44, are interposed between the frame, M1, and the leaf, M2, in such a way as to ensure a spacing, e, of predefined magnitude between frame M1 and leaf M2. This predefined magnitude can be adjusted by replacing the spacer with one of a different size.

As can be seen for example in Figure 4, the support foot, 42, comprises a flat face positioned to rest on the frame, M1, and the leaf, M2. The fact that the face is flat is advantageous for ensuring that the level between the tool, H, and the frame, M1, and the leaf, M2, is correct.

As illustrated in Figures 1 to 7, the angled profile has openings or windows. As seen in Figure 7, these openings facilitate access to the bottom hinge part. This minimizes the possibility of the first support,1, obstructing access to the lower portions of hinge parts B1 and B2, and thereby impeding welding of the lower portion of hinge parts B1 and B2.

As illustrated in Figures 1 to 7, the openings are interspersed between the magnets, M.

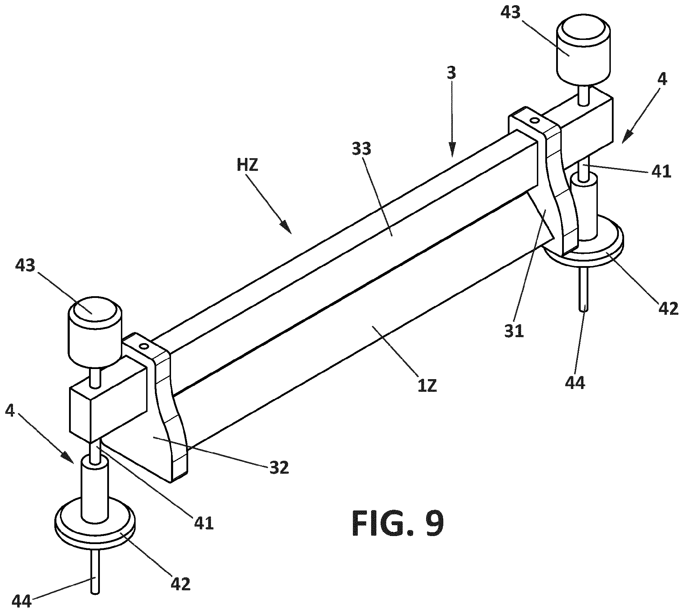

Figure 9 shows a tool, HZ, with an angled profile 1Z without the openings.

Finally, in the embodiment in Figure 1, there are lateral cut-outs in the form of rectangular notches, which allow access to the hinge parts. This will be particularly useful in the case where the diameter of the hinge parts is small, and the angled profile is very close to the frame and/or the leaf, a situation in which it may be difficult to bring the electrode in contact with the hinge parts.

The tool is designed to perform an initial welding phase, of short duration, in which the necessary points are spot welded to position the hinge parts correctly. This will prevent demagnetization of the magnets, M, due to excess heat. Later the tool can be removed, pulling sufficiently to overcome the forces of the magnets, M. The rest of the welding can then be easily done, applying all the heat necessary.

In view of this description and the figures, an expert in the field will be able to understand that the invention has been described based on some preferred embodiments, but that multiple variations can be introduced in these preferred embodiments without abandoning the purpose of the invention as claimed.

In this text, the term "comprises" and its derivations (such as "comprising", etc.) should not be understood in an exclusive sense. That is to say, these terms should not be interpreted as excluding the possibility that what is described and defined may include more elements, stages, etc.

## Claims

1. - Tool (H) for positioning hinge parts (B1, B2) for welding them to a frame (M1) and window/door/gate leaf (M2), comprising a first support (1) for the hinge parts (B1, B2), means for temporary attachment of the hinge parts (B1, B2) to the first support (1) and means for positioning the support (1) with respect to the frame (M1) and to the leaf (M2), **characterized** such that:
- the first support (1) comprises an angled profile;
- the means for temporarily attaching the hinge parts to the first support (1) comprise at least one magnet (M) positioned on the first support (1);
- the means for positioning the support (1) comprise at least two feet (4) positioned at the ends of the tool (H).

2. - Tool according to claim 1, wherein each foot (4) comprises a screw, an actuator (43) for the screw, a support foot (42) positioned to rest on a frame and on a leaf, and a spacer (44) positioned to separate the frame (M1) from the leaf (M2).

3. - Tool (H) according to any one of the preceding claims, wherein the angled profile is an L-shaped or V-shaped profile.

4. - Tool (H) according to any one of the preceding claims, comprising several magnets (M) arranged on the first support (1).

5. - Tool (H) according to any one of the preceding claims, in which the magnet or magnets are neodymium magnets.

6. - Tool (H) according to claim 2, wherein the spacer (44) is a projection from the support foot (42).

7. - Tool (H) according to claim 6, wherein the spacer (44) is detachably joined to the support foot (42).

8. - Tool (H) according to claim 6 or 7, wherein the spacer (44) is a rod.

9. - Tool (H) according to claim 2, comprising an intermediate support (3) supporting the first support (1) and wherein the intermediate support (3) mechanically joins the first support (1) and the feet (4).

10. - Tool (H) according to any of claims 3 to 8, wherein the first support (1) is directly attached to the feet (4).

11. - Tool (H) according to any of the previous claims, wherein the angled profile comprises lateral cutouts or openings intended for the welding electrode to pass-through.

12. - Tool (H) according to any of the previous claims, wherein the legs have a stepped-bottom support surface.

13. - Tool according to any of the claims, the longitudinal dimension of which is on the order of the length of a hinge or the height of a frame and leaf assembly.

14. - Tool according to claim 2, wherein the screw of each foot comprises a locking nut (45).
